# EUROPEAN PATENT APPLICATION

(11) **EP 2 058 801 A2**
(43) Date of publication of application: **13.05.2009**
(21) Application number: 08168738.6
(22) Date of filing: 10.11.2008
(51) Int. Cl.: G10L 15/22

(54) **Method and system for processing multiple dialog sessions in parallel**

(30) Priority: 09.11.2007 US 2519 P
(71) Applicant: Robert Bosch GmbH, 70442 Stuttgart (DE)
(72) Inventor: Shen, Zhongnan, Goleta, CA 93117 (US); Weng, Fuliang, Mountain View,, CA 94040 (US); Meng, Yao, San Jose, CA 95129 (US)
(74) Representative: Barth, Stephan Manuel

(57) **Abstract**

A dialog system and method may generate and maintain in parallel multiple dialog sessions, determine to which dialog session a user speech input applies, selectively provide control to one of the dialog sessions, at any one time, to output data to the user, synchronize multiple dialog sessions, and support user interruptions at any time during the dialog sessions.

## Description

### FIELD OF THE INVENTION

The present invention relates to a system and method for processing multiple dialog sessions or tasks in parallel, and in particular to controlling a sequence in which the sessions obtain dialog control, to synchronize dialog sessions, and to handle user interruptions at anytime during the dialog sessions.

### BACKGROUND INFORMATION

Dialog systems may enhance customer experiences with respect to various applications. Conventional dialog systems, however, typically limit a dialog that may be carried out at any one time to a single dialog session. For example, a dialog session for requesting that a song be played cannot be interrupted to begin a new dialog session to request a different song or perform another activity, e.g., without losing the previously active dialog session.

### SUMMARY OF THE INVENTION

Exemplary embodiments and/or methods of the present invention provide for maintaining multiple dialog sessions in parallel. A plan manager may maintain states of multiple active dialog sessions, distribute incoming utterances to corresponding ones of the active dialog sessions, and synchronize active dialog sessions. An application manager may maintain states of multiple backend processes corresponding to the multiple dialog sessions. The dialog sessions and corresponding backend processes may pertain to complex dialog activities, such as invoking web services, e.g., for obtaining catalog information and executing a purchase transaction.

For example, the processes may pertain to playing a song, providing data based on sensor signals, executing a purchase transaction, and/or other simple or complex business processes. The processes may include multiple steps with (or without) conditionals or control flows, some of which may be executed in response to utterances input for the corresponding dialog sessions. For example, steps may include searching a database for data in accordance with input utterances that are interpreted as search parameters. A step of a backend process may include a first search which returns a first number of results. The dialog session may output a request for additional information to narrow down the results. In response to the additional information, the dialog session may pass on the additional information to the corresponding backend process for narrowing down the results.

The plan manager may determine the dialog session to which each user utterance is to be applied. The plan manager may pass on relevant parameters of the dialog to the application manager. The application manager may input the received parameters to the backend process corresponding to the dialog session from which the parameters were obtained. The process may include, for example, invoking a specified sequence of operations using a collection of services and/or the collaboration among multiple partners.

Such different dialog processes may interleave, depending on user's request, system dialog strategies, and/or application business processes.

### BRIEF DESCRIPTION OF THE DRAWINGS

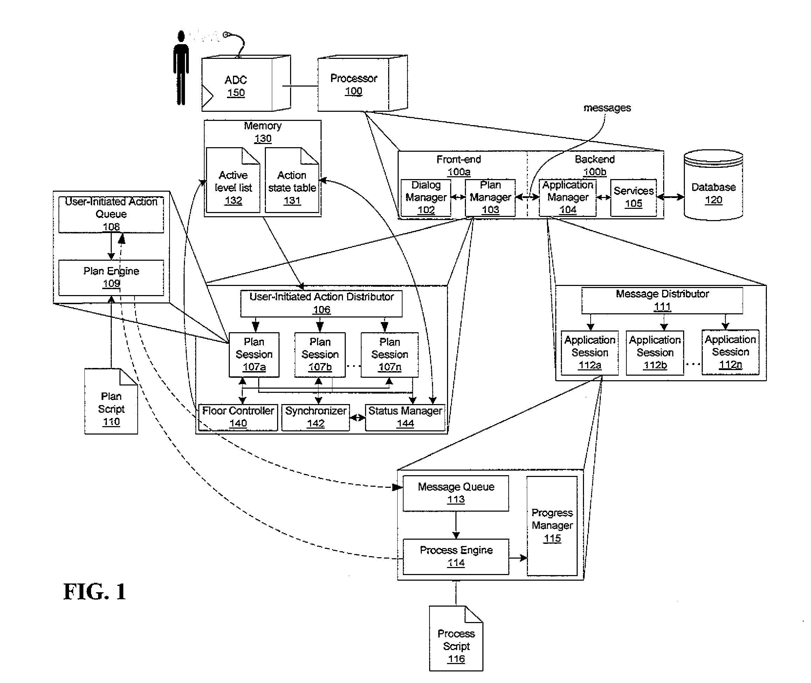

Figure 1 is a block diagram that illustrates components of a system that maintains a plurality of dialog sessions in parallel, according to an example embodiment of the present invention.

### DETAILED DESCRIPTION OF EXAMPLE EMBODIMENTS

As discussed, for example, in co-pending U.S. Patent Application No. 10/952,069 entitled "Method And System For Interactive Conversational Dialogue For Cognitively Overloaded Device Users," filed September 27, 2004, the disclosure of which is incorporated herein by reference in its entirety, a conversational dialog system may handle a "natural conversion" interaction between the user and the system. As discussed, for example, in co-pending U.S. Patent Application No. 11/607,497 entitled "Method And System For Extending Dialog Systems To Process Complex Activities For Applications," filed November 30, 2006, the disclosure of which is incorporated herein by reference in its entirety, a dialog system may be extended to handle complex dialog activities required from various sophisticated applications such as business processes.

Figure 1 is a block diagram that illustrates components of a dialog processing system for performing the methods disclosed herein. The system may include an analog-to-digital converter (ADC) 150 which may receive analog signals representing speech input from a user and convert the signals to digital signals. The ADC 150 may pass the converted signals to a processor 100. Other example embodiments may be implemented without the ADC 150, e.g., where the speech signals are digitally input. The processor 100 may include a front-end 100a for handling a dialog interface to the user and a backend 100b for executing applications responsive to requests by the user. The front-end 100a and backend 100b may be implemented by the processor 100 executing program instructions stored on a memory. For example, the memory may include any hardware implemented computer-readable medium. The processor 100 may be any computer processor or equivalent thereof and may be of any computing device, e.g., a computer, personal digital assistant (PDA), laptop computer, notebook computer, mobile telephone, a hard-drive based device, or any device that can receive, send, and store data.

The front-end 100a may include a dialog manager 102 and a plan manager 103. The backend 100b may include an application manager 104 and services 105. The dialog manager 102 may include a speech recognizer and semantic parser for constructing actions from the user, The dialog manager 103 may also output speech signals via a speaker (not shown) for further interaction with the user. Alternatively, output may be provided visually on a display (not shown). The dialog manager 102 may pass the user-initiated actions to the plan manager 103. The plan manager 103 may generate and manage one or more plan sessions 107a to 107n. The plan manager 103 may include an user-initiated action distributor 106, which may selectively assign a received user-initiated action to one of the plan sessions 107an.

A plan session 107 may include an user-initiated action queue 108 and a plan engine 109. The user-initiated action queue 108 may queue the received user-initiated actions pertaining to the respective plan session 107. The plan engine 109 may instantiate, and execute the instantiation of, a plan script 110. The plan engine 109 may retrieve the queued user-initiated actions during, and use the queued user-initiated actions in, the execution of the instantiated plan script 110, A plan script 110 is a file that defines the presentation logic and dialog strategies of a complex task/application, e.g., according to which the plan engine 109 causes the dialog manager 102 to interface with the user. The plan script 110 may be, e.g., an eXtensible Markup Language (XML) file. The plan script 110 may include a set of business and dialog activities, data flow and control flow of these activities, the controlling logic of user-system conversations, and the controlling logic of communicating with an application session 112 which may invoke services 105. In this regard, the plan script 110 may be used to describe dialog activities people perform to reach certain dialog goals, also referred to herein as dialog strategies. Such examples may include clarification dialog strategies and error recovery dialog strategies.

In a plan script 110, it may invoke other plan scripts 110. A plan script 110 may be called by other plan scripts 110, similar to function or procedure calls in a programming language. The language for plan scripts 110 may include not only conventional control flow structures such as branch and loop, but also some special structures such as activity set. The activity set structure contains a set of activities and the semantics are defined as follows. Each activity in the set is executed when its associated conditions are true. An activity in the set can be re-executed as well when a set of specified conditions are true - it can be the set of the same associated conditions or a different set of conditions from the associated conditions for that activity. The activity set structure is finished when a specified subset of one or more activities are completed.

Different plan scripts 110 may be accessed and instantiated depending on the task to be completed. Which task is to be completed, and therefore which plan script 110 is to be instantiated, may depend on a speech input obtained from the user. For example, a user may input speech interpreted by the dialog manager 102 as "buy product x." The plan manager 103 may generate a plan session 107 implementing a plan script 110 for conducting a dialog pertaining to a purchase transaction. The plan script 110 may, for example, define steps for clarifying the product the user wishes to purchase.

The plan script 110 may include system-initiated steps and user-initiated steps. Further, the plan script 110 may provide several versions of a sequence of one or more steps. A first version may be user-initiated and a second version may be system-initiated. For example, with respect to resolving an address to which a product is to be shipped, in a first version, the user may initiate the step by stating "the product is to be shipped to address x," and in a second version, the system may initiate the step, e.g., if the user has not already done so by the time the point within the plan script 110 that calls for obtaining the information has been reached, by asking "to where do you want to ship the product?" Further, a number of different plan scripts 110 may be instantiated, e.g., in corresponding plan sessions 107, during a single dialog sequence.

In accordance with the plan script 110, the plan engine 109 may, responsive to received user-initiated actions, send instructions for outputting data to the user, e.g., via a speaker or graphical interface, to continue or end the dialog with the user.

In accordance with the plan script 110, the plan engine 109 may additionally or alternatively pass messages, e.g., including processing parameters, to the application manager 104 in response to a received action from the user. The application manager 104 may generate and manage one or more application sessions 112a to 112n corresponding to the plan sessions 107a-n. The application manager 104 may include a message distributor 111 which may provide a received message to the application session 112 corresponding to the plan session 107 from which the message was received. For example, a table may be stored which lists the plan and application sessions. The message distributor 111 may determine to which application session 112 to provide the message based on the listed associations.

An application session 112 may include a message queue 113, a process engine 114, and a status manager 115. The message queue 113 may queue the received messages pertaining to the respective application session 112. The process engine 114 may instantiate, and execute the instantiation of, a process script 116. The process engine 114 may retrieve the queued messages during, and use the queued messages in, the execution of the instantiated process script 116. The process script 116 is a file that defines the application logic of a complex task/application according to which services 105 may be invoked. The process script 116 may be, for example, a Business Process Execution Language For Web Services (BPEL4WS) file. Examples of services 105 include, but are not limited to, a service 105 that searches for data in a database 120 according to parameters included in a message obtained from the message queue 113, a service 105 that activates sensors via which to obtain information, and/or a service 105 that invokes a web service for conducting a transaction. A process engine 114 of a single application session 112 that corresponds to one of the plan engines 109 may instantiate a process script 116 for performing the backend program steps corresponding to the interface steps performed by the plan engine 109 according to a plan script 110.

An example of corresponding plan and process scripts may include the following scripts. The plan script 110 may define transaction dialog steps of getting the name of a product from the user, reporting the product availability to the user, getting a credit card number from the user if it is not available from a customer database, getting a shipping address from the user if it is not available from the customer database, receiving a shipping option selection from the user, receiving an order confirmation from the user, and reporting the status/progress of the purchase transaction, etc. The user can cancel, stop, or resume the purchase transaction at any time, as described more fully below.

The corresponding process script 116 may define transaction execution steps of accessing an inventory web service to check the availability of the product, access the customer database to retrieve the user's information, access credit card web services to verify and charge the credit card, and access a carrier web service to schedule shipping.

In accordance with the process script 116, the process engine 114 may send messages to the plan manager 103, which may provide the message to the intended plan session 107. For example, the plan manager 103 may determine to which plan session 107 to provide the message based on the listed associations of the table between plan and application sessions. The messages may include execution results, in response to which the plan session 107, *i*.*e*., the plan engine 109 of the plan session 107, may instruct the response generator via the dialog manager 102 to output a corresponding report to the user or to output further queries to the user for additional information, or in response to which the plan session 107 may send to the application session 112 responsive messages including data, e.g., based on actions in the user-initiated action queue 108. The messages sent by the process engine 114 may altarnatively or additionally include queries. Responsive to the queries, the plan session 107 may forward the query or generate a corresponding query for the dialog manager 102 to output to the user and/or may send to the application session 112 responsive messages including data, e.g., based on user-initiated actions in the user-initiated action queue 108.

Additional messages including status information regarding the status of an application session 112 may be generated by the progress manager 115 when queried by the user. These messages may be sent by the application session 112 to the plan engine 109.

While some dependencies may exist between execution of a plan script 110 by a plan engine 109 of a plan session 107 and execution of a process script 116 by a process engine 114 of an application session 112 corresponding to the plan session 107, not all steps of each of the plan script 110 and the process script 116 are dependent upon steps of the other of the plan script 110 and the process script 116. For example, the plan engine 109 may instruct the dialog manager 102 to perform a number of dialog interactions with the user in accordance with steps defined by the plan script 110 without sending messages from the application session 112 between executions of those steps. Similarly, the process engine 114 may invoke a number of service actions by one or more services 105 in accordance with steps defined by the process script 116 without receiving messages from the plan session 107 between executions of those steps.

In an example embodiment of the present invention, the user-initiated action distributor 106 may distribute user-initiated actions received from the dialog manager 102 according to a selected heuristic algorithm. For example, the dialog manager 102 may label the user-initiated action as one or more of a plurality of types. A non-exhaustive list of structure types includes "command," "question," "answer," "substantive statement," "opening statement," "closing statement," and/or "partial statement." The user-initiated action distributor 106 may maintain one or more tables and/or lists of the active plan sessions 107a-n. In accordance with the type of a user-initiated action received from the dialog manager 102 and in accordance with the tables and/or lists, the atomic distributor 106 may determine the plan session 107 to which to provide the user-initiated action.

The tables and/or lists may include, for example, an action state table 131 and an active level list 132 stored in a memory 130. The action state table may list identifications (IDs) of the plan sessions 107a-n and, for each plan session 107, a state which indicates whether the plan session 107 is waiting for a user-initiated action, and, if so, a type of user-initiated action for which it is waiting. For example, during a dialog, a plan session 107 may request clarification of a part of a request input by the user, and may accordingly wait for a partial statement including a repetition of part of a previously input speech structure. The table 131 may additionally list the user-initiated actions that are applicable to the plan session 107, but for which the plan session 107 is not waiting. The plan manager 103 may include a status manager 144, described in detail below, which may update the action state table 131 whenever a change occurs regarding the waited on user-initiated actions and/or regarding the applicable user-initiated actions in any of the plan sessions 107a-n.

The active level list 132 may list the active plan sessions 107a-n in order of their degree of activeness. The plan manager 103 may include a status manager 144, described in detail below, which may update the active level list 132 in response to taking control by a plan session 107 of the dialog manager 102 for interfacing with the user. In an example variant of this embodiment, the active level list 132 may further include an indication for each listed plan session 107 of the degree of activeness of the plan session 107. For example, the status manager 144 when updating the active level list 132, may assign a highest activity level to a plan session 107 that last presented output to the user. Alternatively, the status manager 144 when updating the active level list 132, may assign the highest activity level to a plan session that last presented a question to the user.

In response to receipt of a user-initiated action, the user-initiated action distributor 106 may determine, based on the action state table 131, which plan session 107 is waiting for a user-initiated action of the type of the received user-initiated action, and may forward the user-initiated action to the waiting plan session 107. If multiple plan sessions 107 are waiting for the user-initiated action, the user-initiated action distributor 106 may provide it to the one of the multiple plan sessions 107 that is indicated in the active level list 132 to be most active. If no plan session 107 is waiting for the user-initiated action, the user-initiated action distributor 106 may provide the user-initiated action to the plan session 107 for which the action state table 131 indicates the user-initiated action is applicable. If the user-initiated action distributor 106 determines that the user-initiated action is applicable to multiple plan sessions 107, the user-initiated action distributor 106 may provide the user-initiated action to the one of the multiple plan sessions 107 having the highest activity level.

The user-initiated action distributor 106 may determine, based on the user-initiated action type, that the received user-initiated action is not applicable or has a low probability of being applicable to any active plan session 107. If such a determination is made, the plan manager 103 may generate a new plan session 107 to which to provide the received user-initiated action. For example, the user-initiated action may be labeled as an opening statement, for example, where the user says "hello" in a particular intonation, which the user-initiated action distributor 106 may determine is to be applied to a new plan session 107.

Multiple ones of the plan sessions 107a-n may reach a point in the execution of their corresponding plan scripts 110 that require the respective plan engines 109 to instruct the dialog manager 102 to output data, e.g., speech signals via a speaker, to the user. In an example embodiment of the present invention, each plan session 107 sends the output instructions to the dialog manager 102 as soon as the plan session 107 reaches the point in the plan script requiring such output.

In alternative example embodiments of the present invention, the plan manager 103 may include a session floor controller 140 which may execute an algorithm for passing user interface control to the various plan sessions 107, e.g., where only a single one of the plan sessions 107a-n that are active in parallel is given control at any one time to request the dialog manager 102 to provide output to the user. Using such algorithms may be advantageous for ensuring that the multiple ongoing dialogs do not confuse the user and/or for efficiently completing the dialogs.

For example, the session floor controller 140 may maintain a queue of the plan sessions 107a-n that request control from the session floor controller 140. The session floor controller 140 may pass a token to a plan session 107 that is at the top of the queue. Accordingly, a plan session 107 may request control from the session floor controller 140. If the token is available, the session floor controller 140 may pass the token to the requesting plan session 107. If the token is not available, the session floor controller 140 may queue the request of the requesting plan session 107.

If a plan session 107 holding the token instructs the dialog manager 102 to output a report to the user, the token-holding plan session 107 may release the token, so that it may be provided to the plan session 107 having a request that is at the top of the queue, conditional upon that the token-holding plan session 107 has completed instructing the dialog manager 102 regarding the data to be output to the user. If the plan session 107 holding the token instructs the dialog manager 102 to output a question to the user, the token-holding plan session 107 may release the token conditional upon that the token-holding plan session 107 has received a response to the questions from the dialog manager 102.

In an alternative example embodiment of the present invention, the token-holding plan session 107 may retain the token until it completes all of its dialogs. As soon as the token-holding plan session 107 no longer has anymore output to provide to the user, e.g., without waiting for a feedback from a corresponding application session 112, the token-holding plan session 107 may release the token.

In an example embodiment of the present invention, the system may include a session synchronizer 142. The sessions synchronizer may synchronize multiple plan sessions based on plan script 110. The session synchronizer may divide a plan session 107 into two or more plan sessions 107 and/or may merge two or more plan sessions 107 into a single plan session 107.

For example, with respect to session division, a single plan session 107 may be initially generated for a user request to conduct a shopping session. While stepping through the plan script 110, the plan session 107 may receive requests for information regarding a plurality of products. Once information regarding a second product is requested, the session synchronizer 142 may generate a new plan session 107 which is a copy of the prior plan session 107 up until the information request regarding a first product and which includes the information regarding the second product.

Session merges may be implemented, for example, where a common dialog pertains to a part, e.g., an end, of multiple plan sessions 107. For example, where multiple plan sessions 107 are conducted for executing purchase transactions, the different plan sessions 107 may each require the same billing and shipping address information which may be obtained via a single plan session 107. Accordingly, the session synchronizer 142 may merge the plan sessions 107 into a single plan session 107 for obtaining the information from the user. The plan script 110 may, for example, indicate a point along the dialog sequence from which the dialog may additionally pertain to other plan sessions 107. When the point is reached, the session synchronizer 142 may determine whether any other active plan sessions include a similar point in their plan scripts 110. If there are other such plan sessions 107 which have reached that point, the session synchronizer 142 may merge the plan sessions 107 into a single plan session 107. If there are other such plan sessions 107 which have not yet reached that point, the session synchronizer may pause the plan session(s) 107 which have reached that point until the other plan sessions 107 which have not yet reached that point are caught up or otherwise terminated, In a variant of this example embodiment, the plan sessions 107 may be paused for a predetermined amount of time, so that if the lagging plan sessions 107 do not catch up within the predetermined amount of time, they are not merged, and the advanced plan sessions 107 continue execution of their plan scripts 110, e.g., as a single merged plan session 107. In an example embodiment of the present invention, a first plan session 107 to reach the merging point has the other plan sessions 107 merged into it, while the other plan sessions 107, which have been merged into the plan session 107 that has reached the merging point first, are terminated.

In an example embodiment of the present invention, the system may include a session status manager 144 which may maintain a table, e.g., the action state table 131, listing of all plan sessions 107 which have not completed their dialogs and their status. A plan session's indicated status may be "paused" if the user indicates a desire to pause the plan session 107 or "stopped" if the user indicates a desire to discontinue the plan session 107. Where the user-initiated action distributor 106 determines that an incoming user-initiated action is not applicable to any of the active plan sessions 107, the user-initiated action distributor may then determine whether the user-initiated action is intended for one of the stopped plan sessions 107, e.g., where a user changes the user's mind to resume a previously stopped plan session 107. According to this embodiment, the plan manager 103 may generate a new plan session 107 if the user-initiated action is also not applicable to the stopped plan sessions 107.

A plan session can be interrupted by the user at anytime. The interruptions from the user are also wrapped as user-initiated actions and distributed to the corresponding plan session by the action distributor 106. For example, the user can query the number of steps left in a purchase transaction and/or ask the system to repeat some information. Two types of interruptions are supported, terminated interruption and non-terminated interruption. When a plan session gets a terminated interruption, it responses to the interruption and terminates the session. When a plan session gets a non-terminated interruption, after is responses to the interruption, it continues the session.

Those skilled in the art can appreciate from the foregoing description that the present invention may be implemented in a variety of forms. Therefore, while the embodiments of the present invention have been described in connection with particular examples thereof, the true scope of the embodiments and/or methods of the present invention should not be so limited since other modifications will become apparent to the skilled practitioner upon a study of the drawings, specification, and following claims.

## Claims

**1.** A method, comprising:
receiving spoken dialog from a user at a user interface;
generating a plurality of user-initiated actions by a processor based on the received spoken dialog; and
distributing the plurality of user-initiated actions by the processor to a plurality of plan sessions configured to simultaneously execute under control of the processor, each plan session configured to: store in a memory a queue of distributed user-initiated actions, and execute plan scripts to perform the distributed user-initiated actions.

**2.** The method of claim 1, wherein a first user-initiated action is distributed to a first plan session, a second user-initiated action is distributed to a second plan session, and the first and second plan sessions simultaneously execute to perform the first and second user-initiated actions.

**3.** The method of claim 1, wherein:
the processor generates the user-initiated actions to perform an operation requested by the user;
the operation includes at least one of: (a) purchasing a product; (b) searching a database; (c) accessing a web service; (d) accessing a web page; (e) performing a business process; and (d) operating a device; and
the generating of the plurality of user-initiated actions includes digitizing and recognizing words in the spoken dialog under control of the processor.

**4.** The method of claim 3, wherein the device is one of an mp3 player, a CD player, and a stereo.

**5.** The method of claim 1, further comprising storing in a memory an action-state table having an action state corresponding to each of the plan sessions, wherein:
the action state indicates at least one of: (a) whether a corresponding plan session is waiting for a particular user-initiated action; and (b) a type of user-initiated action for which the corresponding plan session is waiting; and
the distributing of at least one of the user-initiated actions to the plan sessions includes determining from the action-state table a subset of the plan sessions that are waiting for particular user-initiated actions.

**6.** The method of claim 1, further comprising storing in a memory an activity-level list having an activity level corresponding to the degree of user-interaction activity corresponding to each of the plan sessions, wherein:
at least one of: (a) a particular plan session associated with a most-recent query-data output to the user is assigned a highest activity level; and (b) a plan session associated with a most-recent data output to the user is assigned the highest activity level; and
the distributing of at least one of the user-initiated actions to the plan sessions includes determining from the activity-level list a plan session having the highest activity level.

**7.** The method of claim 1, further comprising:
upon determining that at least one of the generated user-initiated actions does not correspond to any of the plan sessions executed under control of the processor, initiating a new plan session executed under control of the processor; and
distributing the at least one of the generated user-initiated actions to the newly-initiated plan session.

**8.** The method of claim 1, further comprising:
outputting data to the user via the user interface from at least one of the plan sessions, wherein the data includes at least one of: (a) query data output to the user to request response data from the user; and (b) non-query data output to the user.

**9.** The method of claim 1, further comprising:
storing a list of plan sessions that have requested to output data to the user;
assigning an output-enabling token to a first of the plan sessions in the list of plan sessions;
where the first plan session is required to wait to receive response data in response to outputting of data by the first plan session, upon determining that the outputting of the data and the waiting to receive response data have been completed by the first plan session, assigning the output-enabling token to a second of the plan sessions in the list of plan sessions; and
where the first plan session is not required to wait to receive response data in response to the outputting of data by the first plan session, upon determining that the outputting of the data has been completed by the first plan session, assigning the output-enabling token to the second of the plan sessions in the list of plan sessions.

**10.** The method of claim 1, further comprising:
receiving a request from the user via the user interface to at least one of: (a) pause a particular plan session; and (b) stop a particular plan session; and
in response to receiving the request, storing in an action-state table an indication of at least one of: (a) whether the particular plan session is paused; and (b) whether the particular plan session is stopped.

**11.** The method of claim 1, further comprising at least one of:
while executing a first of the plan sessions, generating and executing a new plan session that is a copy of at least a portion of the first plan session; and
merging at least two of the plan sessions into a single merged plan session to execute a same portion of plan scripts associated with both of the at least two plan sessions.

**12.** A hardware-implemented computer-readable storage medium comprising computer program instructions, which, when executed by a processor, cause the processor to perform a method, the method comprising:
receiving spoken dialog from a user at a user interface;
generating a plurality of user-initiated actions by a processor based on the received spoken dialog; and
distributing the plurality of user-initiated actions by the processor to a plurality of plan sessions configured to simultaneously execute under control of the processor, each plan session configured to: store in a memory a queue of distributed user-initiated actions; and execute plan scripts to perform the distributed user-initiated actions.

**14.** The computer-readable storage medium of claim 12, wherein:
the processor generates the user-initiated actions to perform an operation requested by the user;
the operation includes at least one of: (a) purchasing a product; and (b) searching a database; and
the generating of the plurality of user-initiated actions includes digitizing and recognizing words in the spoken dialog under control of the processor.

**15.** A system, comprising:
a user interface configured to receive spoken dialog from a user; and a processor configured to:
generate a plurality of user-initiated actions based on the received spoken dialog; and
distribute the plurality of user-initiated actions to a plurality of plan sessions that simultaneously execute under control of the processor, each plan session configured to store in a memory a queue of distributed user-initiated actions and execute plan scripts to perform the distributed user-initiated actions.

**16.** The system of claim 15, wherein the processor is configured to at least one of:
while executing a first of the plan sessions, generate and execute a new plan session that is a copy of at least a portion of the first plan session; and
merge at least two of the plan sessions into a single merged plan session to execute a same portion of plan scripts associated with both of the at least two plan sessions.
